# EUROPÄISCHE PATENTSCHRIFT

(11) **EP 0 935 519 B1**
(45) Veröffentlichungstag und Bekanntmachung des Hinweises auf die Patenterteilung: **06.02.2002**
(21) Anmeldenummer: 97945776.9
(22) Anmeldetag: 22.10.1997
(51) Int. Cl.: B29C 33/06, B29C 41/46

(54) **VERFAHREN UND EINE VORRICHTUNG ZUR HERSTELLUNG FLÄCHIGER KUNSTSTOFFSCHICHTEN**
METHOD AND DEVICE FOR PRODUCING FLAT PLASTIC COATINGS
PROCEDE ET DISPOSITIF POUR PRODUIRE DES COUCHES PLASTIQUES EN NAPPE

(30) Priorität: 22.10.1996 DE 19643525; 06.12.1996 DE 19650596
(43) Veröffentlichungstag der Anmeldung: 18.08.1999
(73) Patentinhaber: Bayerische Motoren Werke Aktiengesellschaft, 80788 München (DE)
(72) Erfinder: RUSSMANN, Horst, D-49205 Hasbergen (DE)
(86) Internationale Anmeldenummer: DE9702452
(87) Internationale Veröffentlichungsnummer: WO9817454

(56) Entgegenhaltungen:
- DE-A- 1 479 113
- DE-A- 3 531 606
- US-A- 3 734 665
- US-A- 4 780 345
- US-A- 4 998 872
- PATENT ABSTRACTS OF JAPAN vol. 007, no. 009 (M-185), 14.Januar 1983 & JP 57 167209 A (NIHON KOUSHIYUUHA KK), 15.Oktober 1982,
- PATENT ABSTRACTS OF JAPAN vol. 013, no. 257 (M-837), 14.Juni 1989 & JP 01 061212 A (NIPPON ZEON CO LTD), 8.März 1989,

## Beschreibung

Die Erfindung betrifft eine Vorrichtung zur Herstellung flächiger Kunststoffschichten, vorzugsweise von hautartigen Oberflächenbezügen, aus pastösem, pulvrigem oder granulösem Grundmaterial, mit einem Reaktionsbehälter und einer dem Reaktionsbehälter zum unmittelbaren Erwärmen zugeordneten Induktionsheizeinrichtung, wobei die Induktionsheizeinrichtung um die Außenseite des Reaktionsbehälters angeordnete Induktionsschleifen aufweist.

Aus der Praxis sind die unterschiedlichsten Verfahren und Vorrichtungen zur Herstellung flächiger Kunststoffschichten bekannt. Derartige Kunststoffschichten finden ihre Anwendung bspw. im Kraftfahrzeugbereich, wo diese unter anderem in Form von hautartigen Oberflächenbezügen als Bezugsmaterial für Armaturentafeln sowie für Türverkleidungen und andere abzudeckende Bereiche im Innenraum des Kraftfahrzeugs dienen. Ein typisches Innenausstattungsteil eines Kraftfahrzeugs weist dann im allgemeinen drei Elemente auf: Ein Trägerteil, die hautartige Kunststoffschicht sowie einen dazwischenliegenden Polyurethanschaum.

Die in Rede stehenden hautartigen Oberflächenbezüge wurden früher typischerweise im Tiefziehverfahren hergestellt, wobei heute überwiegend ein Heißschmelzverfahren eingesetzt wird, bei dem ein pastöses, pulvriges oder granulöses Kunststoffgrundmaterial geschmolzen wird.

Bei dem bekannten Herstellungsverfahren wird das pastöse, pulvrige oder granulöse Grundmaterial zunächst in einen metallischen Reaktionsbehälter eingefüllt. Anschließend wird der Reaktionsbehälter mit einem Deckel verschlossen und meistens mittels eines Thermoöls aufgeheizt. Dabei kann sich die Paste, das Pulver oder das Granulat gleichmäßig an der gesamten Innenoberfläche des Reaktionsbehälters verteilen und aufgrund der Temperatur zur Kunststoffschicht ausreagieren. In einem nachfolgenden Schritt wird der Reaktionsbehälter und damit die gebildete Kunststoffschicht abgekühlt, was durch Abkühlen des Thermoöls bewirkt wird. Alternativ zur Aufheizung mittels eines Thermoöls kann auch Heiß-Sand verwendet werden oder eine Aufheizung in einer üblichen Wärmekammer erfolgen. Nach dem Abkühlen kann die gebildete Kunststoffschicht aus dem Reaktionsbehälter entnommen werden.

Bei dem bekannten Verfahren bzw. der bekannten Vorrichtung ist problematisch, daß beim Erwärmen des Reaktionsbehälters und damit des Kunststoffgrundmaterials zunächst ein Heizmedium in Form von Thermoöl, Heiß-Sand oder Luft erwärmt werden muß. Durch diese indirekte Form des Erwärmens sind Wärme- bzw. Energieverluste an die Umgebung unvermeidlich. In energetisch weiter ungünstiger Weise muß das Medium zur Abkühlung des Reaktionsbehälters bzw. der Kunststoffschicht ebenfalls abgekühlt werden, wozu wieder eine erhebliche Energiemenge erforderlich ist.

Beim Erwärmen des Reaktionsbehälters bzw. des Kunststoffgrundmaterials können je nach Grundmaterial unterschiedliche Reaktionstemperaturen erforderlich sein. Hierbei ist eine Temperaturregelung während des Verfahrens sehr nützlich. Bei dem herkömmlichen Verfahren bzw. bei der herkömmlichen Vorrichtung ergibt sich jedoch eine sehr lange Reaktionszeit auf Temperaturregelungsvorgänge, da die Übertragung einer geänderten Temperatur über das Heizmedium auf den Reaktionsbehälter bzw. den Kunststoff äußerst träge verläuft.

Weiter problematisch ist bei dem bekannten Verfahren bzw. bei der bekannten Vorrichtung, daß die Handhabung des Heizmediums, insbesondere von Thermoöl und Heiß-Sand, apparativ sehr aufwendig und unpraktisch ist.

Aus der US-A-3 734 665 ist eine Vorrichtung zur Herstellung flächiger Kunststoffschichten mit allen Merkmalen des Oberbegriffs des Patentanspruchs 1 bekannt. Die Entgegenhaltung beschäftigt sich mit der Erwärmung des Reaktionsbehälters, wobei im Hinblick auf eine möglichst effiziente Erwärmung eine Induktionsheizeinrichtung gewählt ist. Hierzu weist die Induktionsheizeinrichtung Induktionsschleifen auf, die um die Außenseite des Reaktionsbehälters angeordnet sind.

Zur Vermeidung von Wärmeverlusten sind einerseits die Induktionsschleifen unter anderem auf Schaftniveau angeordnet. Andererseits können Wärmeverluste durch Beschichtung des Reaktionsbehälters innen oder außen mit einer Metallschicht geeigneter Wärmeleitfähigkeit verringert werden.

Der vorliegenden Erfindung liegt die Aufgabe zugrunde, eine Vorrichtung zur Herstellung flächiger Kunststoffschichten anzugeben, wonach ein ökonomischer Betrieb der Vorrichtung ohne aufwendige metallische Beschichtung des Behälters ermöglicht ist.

Die zuvor aufgezeigte Aufgabe ist durch eine Vorrichtung mit den Merkmalen des Patentanspruchs 1 gelöst. Danach ist die Vorrichtung derart ausgebildet, daß an der dem Reaktionsbehälter abgewandten Seite der Induktionsschleifen eine Wärmeisolation vorgesehen ist.

Hierdurch sind Wärmeverluste von dem Reaktionsbehälter nach außen vermieden. Dabei ist ein thermisch isoliertes System im Bereich der Rückseite des Reaktionsbehälters realisiert.

Zur Realisierung einer besonders kompakten Ausgestaltung könnten der Reaktionsbehälter und die Induktionsschleifen fest miteinander verbunden sein. Im Hinblick auf eine besonders flexible Vorrichtung könnten die Induktionsschleifen - dem Reaktionsbehälter angepaßt - starr ausgeformt sein, so daß mehrere Reaktionsbehälter hintereinander in die folglich behälterartig ausgeformten Induktionsschleifen einsetzbar sind.

Zur Anpassung an bzw. zum Umgehen von Hinterschneidungen des Reaktionsbehälters könnten die Induktionsschleifen als zumindest zwei Segmente ausgebildet sein und an den Reaktionsbehälter heranklappbar oder heranschiebbar sein.

Im Hinblick auf eine hohe Flexibilität könnte die Wärmeisolation netzartig mit zwischen den Maschen des Netzes angeordnetem Isolationsmaterial aufgebaut sein.

Damit neben Luft oder einem anderen Gas auch Wasser oder sogar Öl als Kühlmedium zum Strömen zwischen den Induktionsschleifen und dem Reaktionsbehälter verwendet werden kann, könnte die Wärmeisolation bzw. die Wärmeisolationsschicht auf der dem Reaktionsbehälter zugewandten Seite gas- und flüssigkeitsundurchlässig abgedichtet sein.

Durch Anordnung einer Wärmeisolation kann auf jeden Fall sichergestellt werden, daß der Reaktionsprozeß des Kunststoffs in einem möglichst gut wärmeisolierten Reaktionsbehälter abläuft.

Im Hinblick auf eine weiter verbesserte Wärmeisolation könnte der Reaktionsbehälter einen elektrisch nicht leitfähigen Deckel aufweisen. Ein derartiger Deckel vermeidet einerseits Wärmeverluste durch die Behälteröffnung und wird andererseits durch die Induktionsheizeinrichtung nicht erwärmt, woraus sich eine problemlose Handhabbarkeit des Deckels ergibt. Des weiteren können weder pastöses noch pulvriges oder granulöses Grundmaterial an dem kalten Deckel anhaften und insofern auch nicht ungewollt an diesem reagieren.

Zur weiteren Verbesserung der Wärmeisolation könnte der Deckel zusätzlich thermisch isoliert sein.

Im Hinblick auf eine konstruktiv besonders einfache Ausgestaltung könnte der Reaktionsbehälter ggf. galvanisch aus Metall hergestellt sein, wobei hinsichtlich der Herstellung einer homogenen Kunststoffschicht eine schalenförmige Ausbildung besonders günstig wäre.

Alles in allem wird der Vorrichtung nur soviel Wärme zugeführt, wie erforderlich ist, um den Reaktionsbehälter auf die Reaktionstemperatur des jeweiligen Kunststoffs zu bringen, den Reaktionsbehälter auf dieser Temperatur zu halten und um den chemischen Prozeß der Kunststoffschichtbildung ablaufen zu lassen. Des weiteren können dabei noch verbleibende geringe Wärmeverluste durch das isolierte Äußere des Gesamtaufbaus kompensiert werden. Hierzu kann in einfacher Weise nach vorgegebenen Zeitabläufen ggf. verlorengegangene oder zusätzlich benötigte Energie zugeführt werden. Materialverluste aufgrund eines Anhaftens von Material an der Innenfläche des Deckels sind aufgrund dessen elektrisch nicht leitender Ausbildung ausgeschlossen. Folglich ist mit der angegebenen Vorrichtung ein außerordentlich wirtschaftliches System realisiert.

Im Hinblick auf die Herstellung unterschiedlicher, ggf. farblich oder materialmäßig voneinander getrennter, Kunststoffschichten könnten entlang der Innenoberfläche des Reaktionsbehälters Stege zur Abtrennung unterschiedlicher Oberflächenbereiche ausgebildet sein. Dabei ist es möglich, voneinander durch die Stege getrennte Oberflächenbereiche mit unterschiedlichem Grundmaterial zu versehen. Damit lassen sich während eines einzigen Erwärmungsvorgangs unterschiedliche Kunststoffschichten herstellen.

Ebenfalls im Hinblick auf die Herstellung unterschiedlicher Kunststoffschichten während eines Erwärmungsvorgangs könnte ein mit innenliegenden Stegen versehener Materialbehälter zum Einfüllen des Grundmaterials in den Reaktionsbehälter vorgesehen sein. Dabei könnten die Stege des Materialbehälters derart ausgebildet sein, daß sie bei einem Einbringen des Materialbehälters in den Reaktionsbehälter auf der Innenoberfläche des Reaktionsbehälters aufliegen. Somit wären durch die Stege des Materialbehälters unterschiedliche Oberflächenbereiche an der Innenoberfläche des Reaktionsbehälters gebildet. Zur klaren Abtrennung der unterschiedlichen Oberflächenbereiche könnten die Stege der Kontur der Innenoberfläche des Reaktionsbehälters angepaßt sein.

Zur Bildung unterschiedlicher Kunststoffschichten könnte der Materialbehälter bereits vor einem Einbringen des Materialbehälters bzw. des Grundmaterials in den Reaktionsbehälter mit spezifischem Grundmaterial befüllt werden. Anschließend könnte der Reaktionsbehälter auf den Materialbehälter positioniert werden und im Anschluß an ein gemeinsames Wenden des Behälters in den Wirkungsbereich der Induktionsschleifen verbracht werden. Die Stege könnten dabei eine räumliche Trennung des Grundmaterials durch Bildung separater Kammern in dem Materialbehälter herbeiführen. Hierzu könnten die Stege von der Oberseite des Materialbehälters bis zu dessen Unterseite im wesentlichen durchgehend ausgebildet sein.

Des weiteren könnte der Materialbehälter an seiner Unterseite vorzugsweise verschließbare Durchgänge zum Einfüllen von Grundmaterial aufweisen oder insoweit offen ausgebildet sein. Hierbei könnte der Materialbehälter zunächst mit auf der Innenoberfläche des Reaktionsbehälters aufliegenden Stegen in den Reaktionsbehälter eingebracht werden. Anschließend könnte das Grundmaterial durch die an der Unterseite ausgebildeten Durchgänge auf die durch die Stege gebildeten spezifischen Oberflächenbereiche des Reaktionsbehälters aufgebracht werden. Der Materialbehälter würde hierdurch eine Art Schablonenfunktion erfüllen.

Wenn nach Anschmelzen der ersten Phase der Materialbehälter mit den Stegen geringfügig angehoben wird, so ist ein Verschmelzen der ursprünglich voneinander getrennten Kunststoffschichten bei dennoch klarer äußerer Trennung von ggf. Farben oder Materialien möglich. Somit wäre eine zusammenhängende Kunststoffschicht mit unterschiedlich gefärbten oder materialmäßig unterschiedlichen Bereichen realisiert.

Zur Vermeidung der Haftung der Kunststoffschichten an den Stegen könnten die Stege und/oder der Materialbehälter aus einem elektrisch nicht leitenden Material ausgebildet sein.

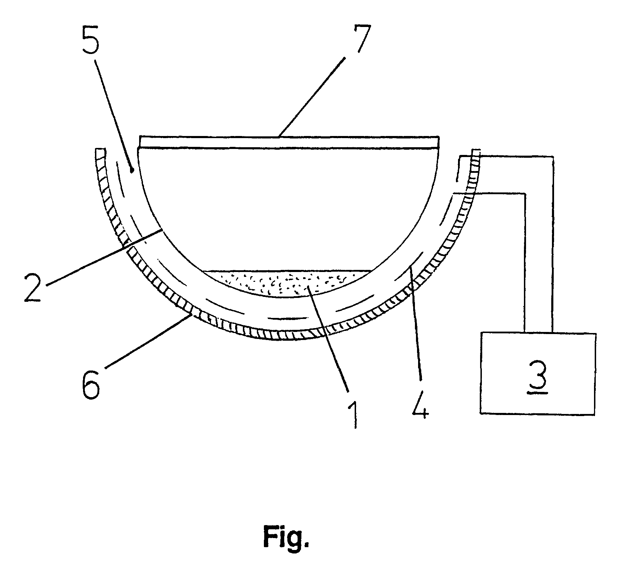

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines Ausführungsbeispiels der erfindungsgemäßen Vorrichtung anhand der Zeichnung zu verweisen. In Verbindung mit der Erläuterung des bevorzugten Ausführungsbeispiels der erfindungsgemäßen Vorrichtung anhand der Zeichnung werden auch im allgemeinen bevorzugte Ausgestaltungen und Weiterbildungen der Lehre erläutert. In der Zeichnung zeigt die
- einzige Figur: in einer Seitenansicht, schematisch, ein Ausführungsbeispiel der erfindungsgemäßen Vorrichtung zur Herstellung flächiger Kunststoffschichten.

Die einzige Figur zeigt in schematischer Darstellung eine Seitenansicht eines Ausführungsbeispiels der erfindungsgemäßen Vorrichtung zur Herstellung flächiger Kunststoffschichten, vorzugsweise von hautartigen Oberflächenbezügen, aus pastösem, pulvrigem oder granulösem Grundmaterial 1. Bei Verwendung von pulvrigem Grundmaterial kann die Korngröße des Pulvers auch derartige Dimensionen annehmen, daß es sich eher um ein Granulat handelt. Der Begriff Pulver ist insoweit als Oberbegriff für körnige Substanzen jeder Korngröße zu verstehen. Das Grundmaterial 1 ist in einen Reaktionsbehälter 2 eingebracht. Um den Reaktionsbehälter 2 ist eine Heizeinrichtung 3 mit Induktionsschleifen 4 angeordnet.

Das Ausführungsbeispiel der erfindungsgemäßen Vorrichtung dient insbesondere zur Durchführung des erfindungsgemäßen Verfahrens zur Herstellung flächiger Kunststoffschichten, wobei im Rahmen dieses Verfahrens zunächst der Reaktionsbehälter 2 in elektrisch leitfähiger Ausgestaltung bereitgestellt wird. Anschließend wird das Grundmaterial 1 in den Reaktionsbehälter 2 eingebracht. Hierauf erfolgt ein induktives Erwärmen des Reaktionsbehälters 2 mittels der Heizeinrichtung 3 über die Induktionsschleifen 4. Alternativ hierzu könnte der Reaktionsbehälter 2 auch vor dem Einbringen des Grundmaterials 1 induktiv erwärmt werden. Während des Reagierens des Grundmaterials 1 zur Kunststoffschicht lagert sich die Kunststoffschicht in einer Kunststoffhaut an der Innenoberfläche des Reaktionsbehälters 2 an. Nach Abschluß des Reagierens erfolgt ein Abkühlen der Kunststoffschicht und/oder des Reaktionsbehälters 2 sowie ein Entnehmen der abgekühlten Kunststoffschicht aus dem Reaktionsbehälter 2.

Die Induktionsschleifen 4 der Heizeinrichtung 3 sind in etwa parallel zum Reaktionsbehälter 2 bzw. dessen Form angepaßt angeordnet. Das Abkühlen der Kunststoffschicht erfolgt durch Strömen eines Kühlmediums durch den Zwischenraum 5 zwischen den Induktionsschleifen 4 und dem Reaktionsbehälter 2. Das Kühlmedium besteht insbesondere aus Umgebungsluft. Der Einsatz eines Gases, von Wasser oder von Öl ist jedoch auch denkbar, wobei das Kühlmedium auch direkt in den Reaktionsbehälter 2 auf die Kunststoffschicht bzw. eine Kunststoffhaut gegeben werden könnte. Vorzugsweise erfolgen das induktive Erwärmen und/oder das Abkühlen rechnergesteuert.

Im Hinblick auf eine möglichst geringe Wärmeabstrahlung durch den Reaktionsbehälter 2 und damit auf ein besonders wirtschaftliches Verfahren ist an der dem Reaktionsbehälter 2 abgewandten Seite der Induktionsschleifen 4 eine Wärmeisolation 6 vorgesehen.

In einer hierzu alternativen Ausgestaltung können die Induktionsschleifen 4 in einer Wärmeisolationsschicht angeordnet sein. Hierdurch wäre ein Wärmeaustausch zwischen der Kühlung der Induktionsschleifen 4 und dem Reaktionsbehälter 2 vermieden.

Bei beiden alternativen Wärmeisolationsausgestaltungen kann die dem Reaktionsbehälter 2 zugewandte Seite der Wärmeisolation 6 bzw. der Wärmeisolationsschicht gas- und flüssigkeitsundurchlässig abgedichtet sein. Dies ermöglicht eine Verwendung von Wasser oder Öl als Kühlmedium.

Zur thermischen Isolation des Reaktionsbehälters 2 ist ein Deckel 7 vorgesehen. Der Deckel 7 ist elektrisch nicht leitfähig ausgebildet, um ein Erwärmen durch die Induktionsheizeinrichtung 3 zu verhindern. In weiter vorteilhafter Weise könnte der Deckel 7 thermisch isoliert sein.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, daß das voranstehend erörterte Ausführungsbeispiel der erfindungsgemäßen Vorrichtung lediglich zur Erörterung der beanspruchten Lehre dient, diese jedoch nicht auf das Ausführungsbeispiel einschränkt.

## Patentansprüche

1. Vorrichtung zur Herstellung flächiger Kunststoffschichten, vorzugsweise von hautartigen Oberflächenbezügen, aus pastösem, pulvrigem oder granulösem Grundmaterial (1), mit einem Reaktionsbehälter (2) und einer dem Reaktionsbehälter (2) zum unmittelbaren Erwärmen zugeordneten Induktionsheizeinrichtung (3), wobei die Induktionsheizeinrichtung (3) um die Außenseite des Reaktionsbehälters (2) angeordnete Induktionsschleifen (4) aufweist,
**dadurch gekennzeichnet, daß** an der dem Reaktionsbehälter (2) abgewandten Seite der Induktionsschleifen (4) eine Wärmeisolation (6) vorgesehen ist.

2. Vorrichtung nach Anspruch 1, **dadurch gekennzeichnet, daß** der Reaktionsbehälter (2) und die Induktionsschleifen (4) fest miteinander verbunden sind oder daß die Induktionsschleifen (4) dem Reaktionsbehälter (2) angepaßt starr ausgeformt sind, so daß mehrere Reaktionsbehälter (2) hintereinander in die behälterartig ausgeformten Induktionsschleifen (4) einsetzbar sind.

3. Vorrichtung nach Anspruch 1, **dadurch gekennzeichnet, daß** die Induktionsschleifen (4) als zumindest zwei Segmente ausgebildet sind und daß die Segmente an den Reaktionsbehälter (2) heranklappbar oder heranschiebbar sind.

4. Vorrichtung nach einem der Ansprüche 1 bis 3, **dadurch gekennzeichnet, daß** die Wärmeisolation (6) netzartig mit zwischen den Maschen des Netzes angeordnetem Isolationsmaterial aufgebaut ist.

5. Vorrichtung nach einem der Ansprüche 1 bis 4, **dadurch gekennzeichnet, daß** die Wärmeisolation (6) auf der dem Reaktionsbehälter (2) zugewandten Seite gas- und flüssigkeitsundurchlässig abgedichtet ist.

6. Vorrichtung nach einem der Ansprüche 1 bis 5, **dadurch gekennzeichnet, daß** der Reaktionsbehälter (2) einen elektrisch nicht leitfähigen Deckel (7) aufweist.

7. Vorrichtung nach Anspruch 6, **dadurch gekennzeichnet, daß** der Deckel (7) thermisch isoliert ist.

8. Vorrichtung nach einem der Ansprüche 1 bis 7, **dadurch gekennzeichnet, daß** der Reaktionsbehälter (2) aus Metall hergestellt ist.

9. Vorrichtung nach einem der Ansprüche 1 bis 8, **dadurch gekennzeichnet, daß** der Reaktionsbehälter (2) schalenförmig ausgebildet ist.

10. Vorrichtung nach einem der Ansprüche 1 bis 9, **dadurch gekennzeichnet, daß** entlang der Innenoberfläche des Reaktionsbehälters (2) Stege zur Abtrennung unterschiedlicher Oberflächenbereiche ausgebildet sind.

11. Vorrichtung nach einem der Ansprüche 1 bis 9, **dadurch gekennzeichnet, daß** ein mit innenliegenden Stegen versehener Materialbehälter zum Einfüllen des Grundmaterials (1) in den Reaktionsbehälter (2) vorgesehen ist.

12. Vorrichtung nach Anspruch 11, **dadurch gekennzeichnet, daß** die Stege derart ausgebildet sind, daß sie bei Einbringen des Materialbehälters in den Reaktionsbehälter (2) auf der Innenoberfläche des Reaktionsbehälters (2) aufliegen.

13. Vorrichtung nach Anspruch 11 oder 12, **dadurch gekennzeichnet, daß** die Stege der Kontur der Innenoberfläche des Reaktionsbehälters (2) angepaßt sind.

14. Vorrichtung nach einem der Ansprüche 11 bis 13, **dadurch gekennzeichnet, daß** der Materialbehälter an seiner Unterseite vorzugsweise verschließbare Durchgänge zum Einfüllen von Grundmaterial (1) aufweist oder insoweit offen ausgebildet ist.

15. Vorrichtung nach einem der Ansprüche 10 bis 14, **dadurch gekennzeichnet, daß** die Stege und/oder der Materialbehälter aus einem elektrisch nicht leitenden Material ausgebildet sind.

## Claims

1. A device for producing flat plastics material layers, preferably skin-like surface coatings, from pasty, pulverulent or granular base material (1), comprising a reaction container (2) and an induction heater (3) associated with the reaction container (2) for direct heating, wherein the induction heater (3) has induction loops (4) disposed on the outside of the reaction container (2),
**characterised in that** heat insulation (6) is provided on the side of the induction loops (4) remote from the reaction container (2).

2. A device according to claim 1, **characterised in that** the reaction container (2) and the induction loop (4) are firmly interconnected or the induction loops (4) are rigidly shaped to match the reaction container (2) so that a number of reaction containers (2) can be inserted one behind the other into the container-shaped induction loops (4).

3. A device according to claim 1, **characterised in that** the induction loops (4) are in at least two segments and the segments can be folded or slid on to the reaction container (2).

4. A device according to any of claims 1 to 3, **characterised in that** the heat insulation (6) is in the form of a net with insulating material disposed between the meshes of the net.

5. A device according to any of claims 1 to 4, **characterised in that** the heat insulation (6) on the side facing the reaction container (2) is sealed so as to be impermeable to water and liquid.

6. A device according to any of claims 1 to 5, **characterised in that** the reaction container (2) has an electrically non-conducting cover (7).

7. A device according to claim 6, **characterised in that** the cover (7) is heat-insulated.

8. A device according to any of claims 1 to 7, **characterised in that** the reaction container (2) is of metal.

9. A device according to any of claims 1 to 8, **characterised in that** the reaction container (2) is dish-shaped.

10. A device according to any of claims 1 to 9, **characterised in that** webs for separating different surface regions are formed along the inner surface of the reaction container (2).

11. A device according to any of claims 1 to 9, **characterised in that** a container having internal webs is provided for pouring the base material (1) into the reaction container (2).

12. A device according to claim 11, **characterised in that** the webs are shaped so that when the material container is placed in the reaction container (2) the webs lie on the inner surface of the reaction container (2).

13. A device according to claim 11 or claim 12, **characterised in that** the webs are adapted to the contour of the inner surface of the reaction container (2).

14. A device according to any of claims 11 to 13, **characterised in that** the material container has preferably closable passages on its underside for pouring in the base material (1), or has corresponding openings.

15. A device according to any of claims 10 to 14, **characterised in that** the webs and/or the material container are made of an electrically non-conducting material.

## Revendications

1. Dispositif pour fabriquer des couches de matière plastique en nappes, de préférence des revêtements de surfaces en forme de peaux à partir d'une matière de base (1), à l'état de pâte, de poudre, ou de granulés, comprenant un réacteur (2) et une installation de chauffage par induction (3) associée au réacteur (2) pour le chauffer directement, l'installation d'induction (3) ayant des boucles inductives (4) autour du côté extérieur du réacteur (2),
**caractérisé en ce que**
le côté des boucles inductives (4) non tourné vers le réacteur (2) comporte un moyen d'isolation thermique (6).

2. Dispositif selon la revendication 1,
**caractérisé en ce que**
le réacteur (2) et les boucles inductives (4) sont reliées solidairement entre eux, ou bien les boucles inductives (4) sont adaptées au réacteur (2) de façon rigide, de manière à pouvoir utiliser plusieurs réacteurs (2) les uns derrière les autres dans des boucles inductives (4) en forme de récipient.

3. Dispositif selon la revendication 1,
**caractérisé en ce que**
les boucles inductives (4) sont au moins réalisées sous forme de deux segments et les segments peuvent être rabattus ou repliés contre le récipient de réaction (2).

4. Dispositif selon l'une quelconque des revendications 1 à 3,
**caractérisé en ce que**
l'isolation thermique (6) est réalisée sous la forme d'un réseau avec de la matière isolante prévue entre les mailles du réseau.

5. Dispositif selon l'une quelconque des revendications 1 à 4,
**caractérisé en ce que**
l'isolation thermique (6) est étanche aux gaz et aux liquides du côté tourné vers le réacteur (2).

6. Dispositif selon l'une quelconque des revendications 1 à 5,
**caractérisé en ce que**
le réacteur (2) comporte un couvercle (7) non conducteur électrique.

7. Dispositif selon la revendication 6,
**caractérisé en ce que**
le couvercle (7) est isolé thermiquement.

8. Dispositif selon l'une quelconque des revendications 1 à 7,
**caractérisé en ce que**
le réacteur (2) est en métal.

9. Dispositif selon l'une quelconque des revendications 1 à 8,
**caractérisé en ce que**
le réacteur (2) est en forme de coquille.

10. Dispositif selon l'une quelconque des revendications 1 à 9,
**caractérisé en ce que**
des nervures sont formées le long de la surface intérieure du réacteur (2), pour séparer des zones de surfaces différentes.

11. Dispositif selon l'une quelconque des revendications 1 à 9,
**caractérisé en ce qu'**
un réservoir de matière muni de nervures situées du côté intérieur est prévu pour remplir la matière de base (1) dans le réacteur (2).

12. Dispositif selon la revendication 11,
**caractérisé en ce que**
les nervures sont réalisées pour s'appuyer contre la surface intérieure du réacteur (2) lorsqu'on introduit le réservoir de matière dans le réacteur (2).

13. Dispositif selon l'une quelconque des revendications 11 ou 12,
**caractérisé en ce que**
les nervures sont adaptées au contour de la surface superficielle intérieure du réacteur (2).

14. Dispositif selon l'une quelconque des revendications 11 à 13,
**caractérisé en ce que**
le réservoir de matière présente sur son côté inférieur de préférence des passages susceptibles d'être fermés pour charger la matière de base (1), ou est tout du moins ouvert.

15. Dispositif selon l'une quelconque des revendications 10 à 14,
**caractérisé en ce que**
les nervures et/ou le réservoir sont en une matière non conductrice électrique.
